(19) Europäisches Patentamt / European Patent Office / Office européen des brevets

(11) **EP 4 404 679 A1**

(12) **EUROPEAN PATENT APPLICATION**
published in accordance with Art. 153(4) EPC

(43) Date of publication:
**24.07.2024 Bulletin 2024/30**

(21) Application number: **22870284.1**

(22) Date of filing: **14.09.2022**

(51) International Patent Classification (IPC):
*H04W 76/11 (2018.01)*  *H04W 76/14 (2018.01)*
*H04W 80/02 (2009.01)*  *H04W 88/04 (2009.01)*
*H04W 92/18 (2009.01)*  *H04W 92/10 (2009.01)*

(52) Cooperative Patent Classification (CPC):
H04W 76/11; H04W 76/14; H04W 80/02;
H04W 88/04; H04W 92/10; H04W 92/18

(86) International application number:
**PCT/KR2022/013739**

(87) International publication number:
**WO 2023/043200 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.09.2021 KR 20210122612
16.09.2021 KR 20210124119
24.09.2021 KR 20210126683**

(71) Applicant: **LG Electronics Inc.
Yeongdeungpo-gu
Seoul 07336 (KR)**

(72) Inventors:
• **BACK, Seoyoung**
  **Seoul 06772 (KR)**
• **LEE, Seungmin**
  **Seoul 06772 (KR)**
• **PARK, Giwon**
  **Seoul 06772 (KR)**
• **HONG, Jongwoo**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **OPERATION METHOD OF RELAY UE RELATED TO SIDELINK CONNECTION ESTABLISHMENT IN WIRELESS COMMUNICATION SYSTEM**

(57)     An embodiment relates to an operation method of a relay UE in a wireless communication system, the method comprising: receiving, by the relay UE, an RRC setup request from a remote UE; transmitting, by the relay UE, SidelinkUEInformation including an L2 ID of the remote UE to a base station; and receiving, by the relay UE, an RRCReconfiguration message including a local ID of the remote UE from the base station, wherein the SidelinkUEInformation includes an indicator indicating that the SidelinkUEInformation is a request related to the remote UE.

FIG. 16

Receive RRC Setup request from remote UE — S1601

Transmit SidelinkUEInformation including L2 ID of remote UE to base station — S1602

Receive RRCReconfiguration message containing local ID of remote UE from base station — S1603

**Description**

[Technical Field]

The following description relates to a wireless communication system, and more particularly, to a method and device for operating a relay UE related to establishing a sidelink connection

[Background Art]

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

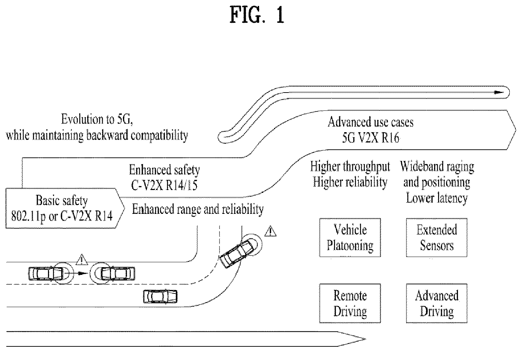

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

[Disclosure]

[Technical Problem]

An object of the embodiment(s) is to provide methods for establishing a connection in a sidelink relay that involve a relay UE transmitting a L2 ID to a base station and receiving a corresponding Local ID

[Technical Solution]

In one embodiment, a method of operating a relay user equipment (UE) in a wireless communication system may include receiving, by the relay UE, an RRC Setup request from a remote UE, transmitting, by the relay UE, SidelinkUEInformation including an L2 ID of the remote UE to a base station, and receiving, by the relay UE, an RRCReconfiguration message containing a local ID of the remote UE from the base station, wherein the SidelinkUEInformation may include an indicator indicating that the SidelinkUEInformation is a request related to the remote UE.

In one embodiment, a relay UE in a wireless communication system may include at least one processor, and at least one computer memory operably connectable to the at least one processor and storing instructions that, when executed, cause the at least one processor to perform operations. The operations may include receiving, by the relay UE, an RRC Setup request from a remote UE, transmitting, by the relay UE, SidelinkUEInformation including an L2 ID of the remote UE to a base station, and receiving, by the relay UE, an RRCReconfiguration message containing a local ID of the remote UE from the base station, wherein the SidelinkUEInformation may include an indicator indicating that the SidelinkUEInformation is a request related to the remote UE.

In one embodiment, provided is a processor for performing operations for a relay UE in a wireless communication system. The operations may include receiving, by the relay UE, an RRC Setup request from a remote UE, transmitting, by the relay UE, SidelinkUEInformation including an L2 ID of the remote UE to a base station, and receiving, by the relay UE, an RRCReconfiguration message containing a local ID of the remote UE from the base station, wherein the SidelinkUEInformation may include an indicator indicating that the SidelinkUEInformation is a request related to the remote UE.

In one embodiment, provided is a non-volatile computer-readable storage medium storing at least one computer program containing instructions that, when executed by at least one processor, cause the at least one processor to perform operations for a relay UE. The operations may include receiving, by the relay UE, an RRC Setup request from a remote UE, transmitting, by the relay UE, SidelinkUEInformation including an L2 ID of the remote UE to a base station, and receiving, by the relay UE, an RRCReconfiguration message containing a local ID of the remote UE from the base station, wherein the SidelinkUEInformation may include an indicator indicating that the SidelinkUEInformation is a request related to the remote UE.

The local ID may be received after transmitting the L2 ID.

The local ID may be received before transmitting a first uplink (UL) message to the base station.

The local ID may be determined based on an L2 ID of the remote UE.

The RRC Setup request may be an initial message for establishment of a connection with the base station by the remote UE.

The RRC Setup request may be received through sidelink (SL) signaling radio bearer (SRB) 0.

The RRCReconfiguration message may contain a Uu bearer configuration for transmission of a message of the remote UE.

The RRCReconfiguration message may contain the L2 ID along with the local ID.

The base station may be a gNB.

The relay UE may communicate with at least one of another UE, a UE or base station related to an autonomous vehicle, or a network.

[Advantageous Effects]

In one embodiment, an issue of a base station not being capable of identifying a UE for a target relay UE to perform RRCReconfiguration with may be addressed.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram comparing vehicle-to-everything (V2X) communication based on pre-new radio access technology (pre-NR) with V2X communication based on NR;

FIG. 2 is a diagram illustrating the structure of a long term evolution (LTE) system according to an embodiment of the present disclosure;

FIG. 3 is a diagram illustrating user-plane and control-plane radio protocol architectures according to an embodiment of the present disclosure;

FIG. 4 is a diagram illustrating the structure of an NR system according to an embodiment of the present disclosure;

FIG. 5 is a diagram illustrating functional split between a next generation radio access network (NG-RAN) and a 5th generation core network (5GC) according to an embodiment of the present disclosure;

FIG. 6 is a diagram illustrating the structure of an NR radio frame to which embodiment(s) of the present disclosure is applicable;

FIG. 7 is a diagram illustrating a slot structure of an NR frame according to an embodiment of the present disclosure;

FIG. 8 is a diagram illustrating radio protocol architectures for sidelink (SL) communication according to an embodiment of the present disclosure;

FIG. 9 is a diagram illustrating radio protocol architectures for SL communication according to an embodiment of the present disclosure;

FIG. 10 illustrates a synchronization source or synchronization reference of V2X according to an embodiment of the present disclosure;

FIG. 11 illustrates a procedure for a user equipment (UE) to perform V2X or SL communication depending on transmission modes according to an embodiment of the present disclosure;

FIG. 12 illustrates a procedure for a UE to perform path switching according to one embodiment of the present disclosure;

FIG. 13 illustrates direct to indirect path switching;

FIG. 14 illustrates a remote UE connection establishment procedure;

FIG. 15 illustrates a protocol stack for a user plane and control plane in an L2 U2N relay architecture;

FIGS. 16 to 19 illustrate embodiments; and

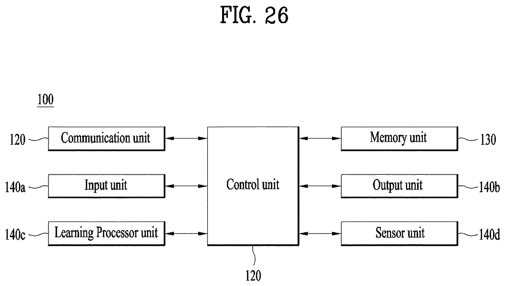

FIGS. 20 to 26 illustrate various devices to which the embodiment(s) are applicable.

[Best Mode]

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1 GHz, an intermediate frequency band between 1 GHz and 10 GHz, and a high frequency (millimeter) band of 24 GHz or above.

While the following description is given mainly in the context of LTE-A or 5G NR for the clarity of description, the technical idea of an embodiment of the present disclosure is not limited thereto.

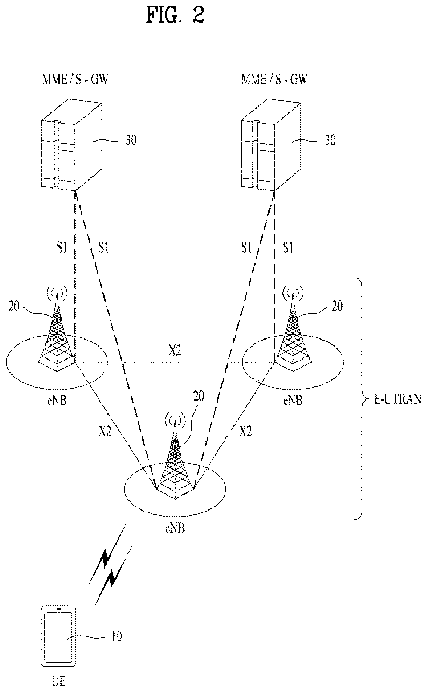

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

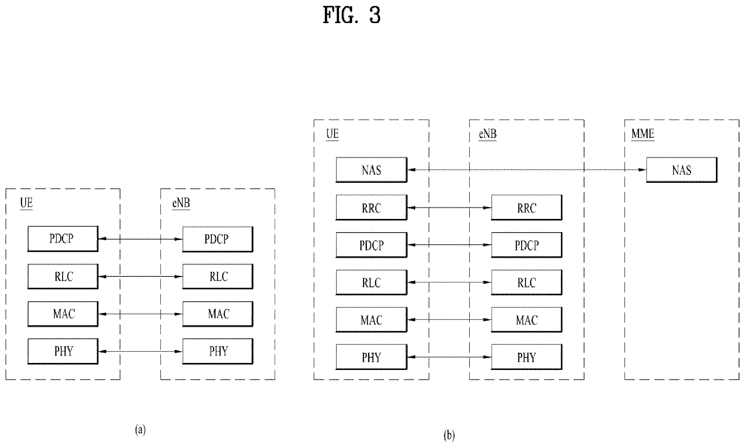

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering.

The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

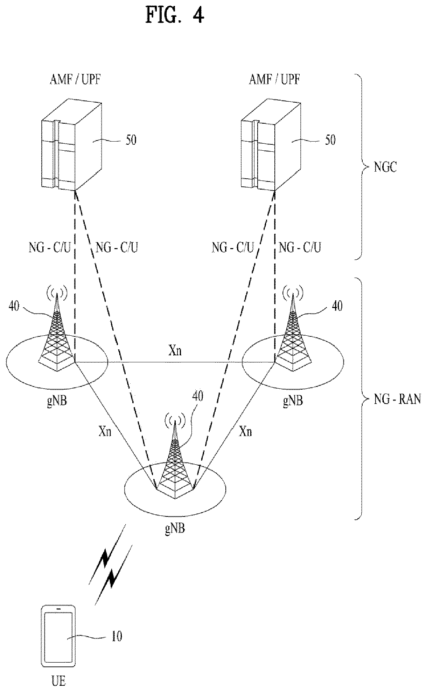

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

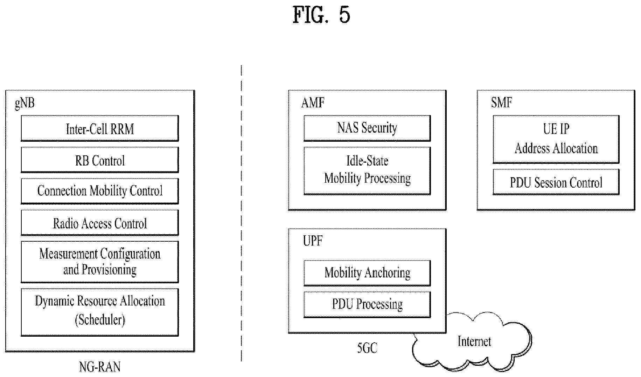

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

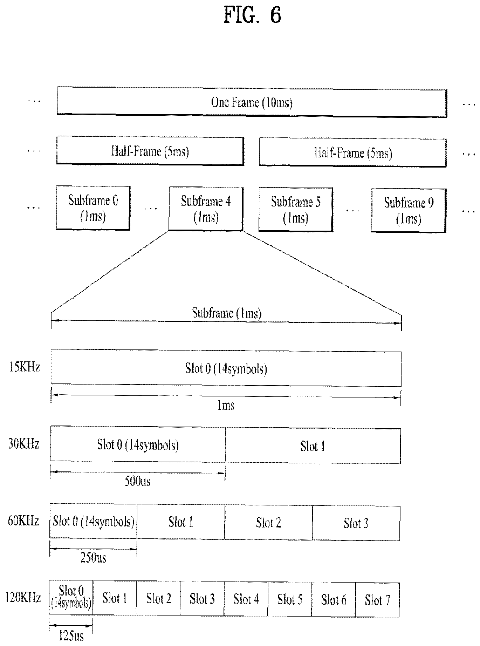

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot Nslotsymb, the number of slots per frame Nframe,uslot, and the number of slots per subframe Nsubframe,uslot according to an SCS configuration μ in the NCP case.

[Table 1]

| SCS (15*2u) | $N^{Slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |

(continued)

| SCS (15*2u) | $N^{Slot}_{symb}$ | $N^{frame,u}_{slot}$ | $N^{subframe,u}_{slot}$ |
|---|---|---|---|
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15 kHz, a wide area in traditional cellular bands may be supported, while with an SCS of 30/60 kHz, a dense urban area, a lower latency, and a wide carrier bandwidth may be supported. With an SCS of 60 kHz or higher, a bandwidth larger than 24.25 GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6 GHz range" and FR2 may be an "above 6 GHz range" called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerals in a frequency range may be changed in the NR system. For example, FR1 may range from 410 MHz to 7125 MHz as listed in [Table 4]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

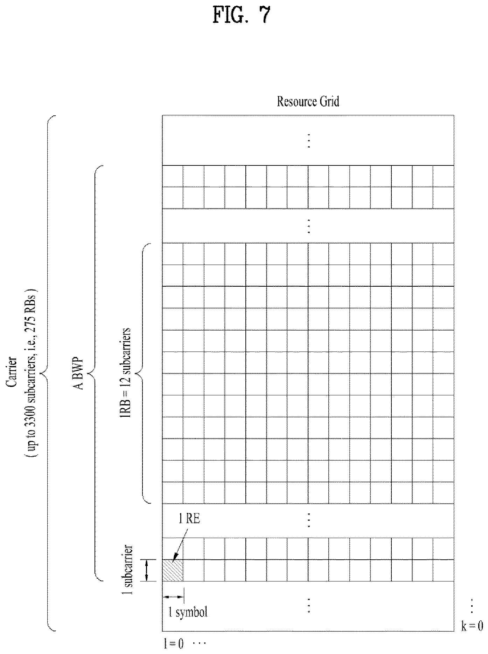

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3.

In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

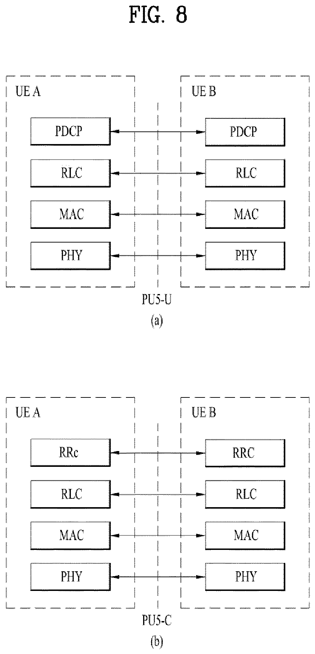

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

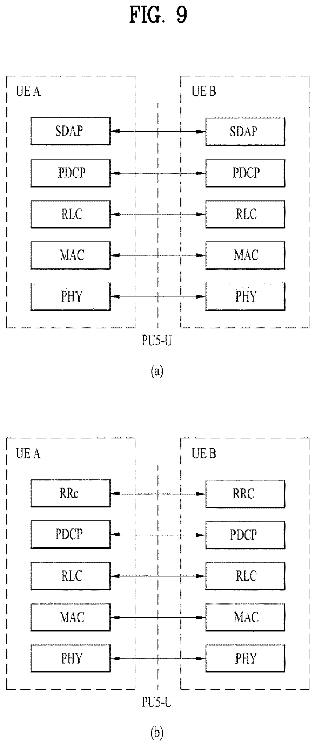

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

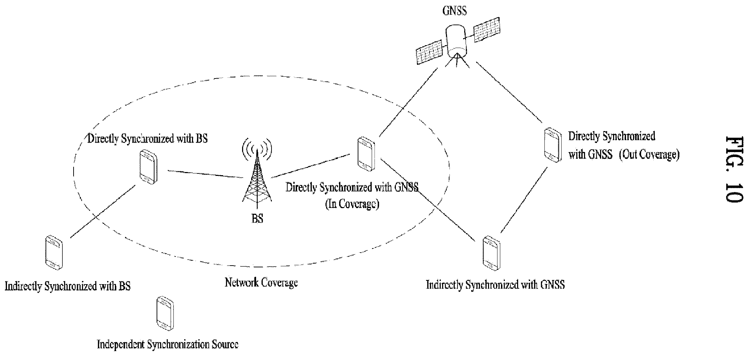

FIG. 10 illustrates a synchronization source or a synchronization reference of V2X according to an embodiment of the present disclosure.

Referring to FIG. 10, in V2X, a UE may be directly synchronized with global navigation satellite systems (GNSS). Alternatively, the UE may be indirectly synchronized with the GNSS through another UE (within or out of network coverage). If the GNSS is configured as a synchronization source, a UE may calculate a direct frame number (DFN) and a subframe number using coordinated universal time (UTC) and a (pre)configured DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

An SL synchronization source may be associated with a synchronization priority level. For example, the relationship between synchronization sources and synchronization priorities may be defined as shown in Table 5 or 6. Table 5 or 6 is merely an example, and the relationship between synchronization sources and synchronization priorities may be defined in various forms.

Table 5

| Priority level | GNSS-based synchronization | BS-based synchronization (eNB/gNB-based synchronization) |
| --- | --- | --- |
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

Table 6

| Priority level | GNSS-based synchronization | BS-based synchronization (eNB/gNB-based synchronization) |
| --- | --- | --- |
| P0 | GNSS | BS |

(continued)

| Priority level | GNSS-based synchronization | BS-based synchronization (eNB/gNB-based synchronization) |
|---|---|---|
| P1 | All UEs directly synchronized with GNSS | All UEs directly synchronized with BS |
| P2 | All UEs indirectly synchronized with GNSS | All UEs indirectly synchronized with GNSS |
| P3 | BS | GNSS |
| P4 | All UEs directly synchronized with GNSS | All UEs directly synchronized with GNSS |
| P5 | All UEs indirectly synchronized with GNSS | All UEs indirectly synchronized with GNSS |
| P6 | Remaining UE(s) with low priority | Remaining UE(s) with low priority |

In Table 5 or 6, P0 may mean the highest priority, and P6 may mean the lowest priority. In Table 5 or 6, the BS may include at least one of a gNB or an eNB.

Whether to use GNSS-based synchronization or BS-based synchronization may be configured (in advance). In single-carrier operation, the UE may derive the transmission timing of the UE from an available synchronization reference with the highest priority.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before SL signal transmission and reception. For example, the default information may include information related to an SLSS, a duplex mode (DM), a time division duplex (TDD) UL/DL configuration, information related to a resource pool, an application type related to the SLSS, a subframe offset, broadcast information, or the like. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SL BWP. For example, the S-SSB may have a bandwidth of 11 RBs. For example, the PSBCH may span 11 RBs. In addition, the frequency position of the S-SSB may be configured (in advance). Therefore, the UE does not need to perform hypothesis detection on frequency to discover the S-SSB in the carrier.

The NR SL system may support a plurality of numerologies with different SCSs and/or CP lengths. In this case, as the SCS increases, the length of a time resource on which the transmitting UE transmits the S-SSB may decrease. Accordingly, the coverage of the S-SSB may be reduced. Therefore, in order to guarantee the coverage of the S-SSB, the transmitting UE may transmit one or more S-SSBs to the receiving UE within one S-SSB transmission period based on the SCS. For example, the number of S-SSBs that the transmitting UE transmits to the receiving UE within one S-SSB transmission period may be pre-configured or configured for the transmitting UE. For example, the S-SSB transmission period may be 160 ms. For example, an S-SSB transmission period of 160 ms may be supported for all SCSs.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two or four S-SSBs to the receiving UE within one S-SSB transmission period.

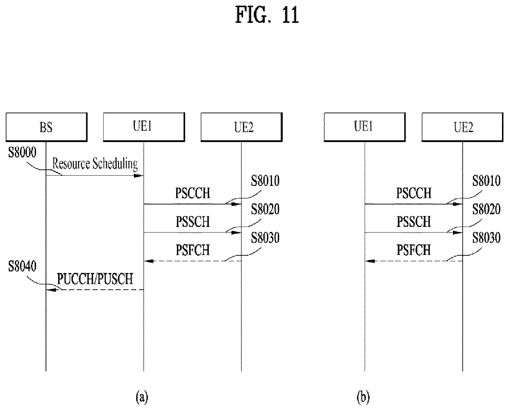

FIG. 11 illustrates a procedure of performing V2X or SL communication by a UE depending on a transmission mode according to an embodiment of the present disclosure. The embodiment of FIG. 11 may be combined with various embodiment of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 11 (a) illustrates a UE operation related to LTE transmission mode 1 or LTE transmission mode 3. Alternatively, for example, FIG. 11 (a) illustrates a UE operation related to NR resource allocation mode 1. For example, LTE transmission mode 1 may apply to general SL communication, and LTE transmission mode 3 may apply to V2X communication.

For example, FIG. 11 (b) illustrates a UE operation related to LTE transmission mode 2 or LTE transmission mode 4. Alternatively, for example, FIG. 11 (b) illustrates a UE operation related to NR resource allocation mode 2.

Referring to FIG. 11 (a), in LTE transmission mode 1, LTE transmission mode 3, or NR resource allocation mode 1, a BS may schedule an SL resource to be used for SL transmission by a UE. For example, in operation S8000, the BS may transmit information related to an SL resource and/or information related to a UE resource to a first UE. For example, the UL resource may include a PUCCH resource and/or a PUSCH resource. For example, the UL resource may be a resource to report SL HARQ feedback to the BS.

For example, a first UE may receive information related to a Dynamic Grant (DG) resource and/or information related to a Configured Grant (CG) resource from a BS. For example, the CG resource may include a CG type 1 resource or a CG type 2 resource. In the present specification, the DG resource may be a resource that the BS configures/allocates to the first UE over Downlink Control Information (DCI). In the present specification, the CG resource may be a (periodic) resource configured/allocated by the BS to the first UE over a DCI and/or an RRC message. For example, in the case of the CG type 1 resource, the BS may transmit an RRC message including information related to the CG resource to the first UE. For example, in the case of the CG type 2 resource, the BS may transmit an RRC message including information related to the CG resource to the first UE, and the BS may transmit DCI related to activation or release of the CG resource to the first UE.

In operation S8010, the first UE may transmit PSCCH (e.g., Sidelink Control Information (SCI) or 1st-stage SCI) to a second UE based on the resource scheduling. In operation S8020, the first UE may transmit PSSCH (e.g., 2nd-stage SCI, MAC PDU, data, etc.) related to the PSCCH to the second UE. In operation S8030, the first UE may receive PSFCH related to the PSCCH/PSSCH from the second UE. For example, HARQ feedback information (e.g., NACK information or ACK information) may be received from the second UE over the PSFCH. In operation S8040, the first UE may transmit/report HARQ feedback information to the BS over PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 7 shows one example of DCI for scheduling of SL.

[Table 7]

| 7.3.1.4.1 Format 3_0 |
| --- |
| DCI format 3_0 is used for scheduling of NR PSCCH and NR PSSCH in one cell. <br><br> The following information is transmitted by means of the DCI format 3_0 with CRC scrambled by SL-RNTI or SL-CS-RNTI: <br><br>     - Resource pool index - $\lceil \log_2 I \rceil$ bits, where $I$ is the number of resource pools for transmission configured by the higher layer parameter *sl-TxPoolScheduling.* <br>     - Time gap - 3 bits determined by higher layer parameter *sl-DCI-ToSL-Trans,* as defined in clause 8.1.2.1 of [6, TS 38.214] <br>     - HARQ process number - 4 bits. <br>     - New data indicator - 1 bit. <br>     - Lowest index of the subchannel allocation to the initial transmission - <br><br>     $\left\lceil \log_2(N_{\text{subChannel}}^{\text{SL}}) \right\rceil$ bits as defined in clause 8.1.2.2 of [6, TS 38.214] <br>     - SCI format 1-A fields according to clause 8.3.1.1: <br>     - Frequency resource assignment. <br>     - Time resource assignment. |

(continued)

| 7.3.1.4.1 | Format 3_0 |
| --- | --- |

- PSFCH-to-HARQ feedback timing indicator - $\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]

- PUCCH resource indicator - 3 bits as defined in clause 16.5 of [5, TS 38.213].

- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.

- Counter sidelink assignment index - 2 bits

- 2 bits as defined in clause 16.5.2 of [5, TS 38.213] if the UE is configured with *pdsch-HARQ-ACK-Codebook = dynamic*

- 2 bits as defined in clause 16.5.1 of [5, TS 38.213] if the UE is configured with *pdsch-HARQ-ACK-Codebook = semi-static*

- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

| 7.3.1.4.2 | Format 3_1 |
| --- | --- |

DCI format 3_1 is used for scheduling of LTE PSCCH and LTE PSSCH in one cell.

The following information is transmitted by means of the DCI format 3_1 with CRC scrambled by SL Semi-Persistent Scheduling V-RNTI:

- Timing offset - 3 bits determined by higher layer parameter *sl-TimeOffsetEUTRA-List,* as defined in clause 16.6 of [5, TS 38.213]

- Carrier indicator -3 bits as defined in 5.3.3.1.9A of [11, TS 36.212].

- Lowest index of the subchannel allocation to the initial transmission - $\lceil \log_2 (N_{\text{subchannel}}^{\text{SL}}) \rceil$ bits as defined in 5.3.3.1.9A of [11, TS 36.212].

- Frequency resource location of initial transmission and retransmission, as defined in 5.3.3.1.9A of [11, TS 36.212]

- Time gap between initial transmission and retransmission, as defined in 5.3.3.1.9A of [11, TS 36.212]

- SL index - 2 bits as defined in 5.3.3.1.9A of [11, TS 36.212]

- SL SPS configuration index - 3 bits as defined in clause 5.3.3.1.9A of [11, TS 36.212].

- Activation/release indication - 1 bit as defined in clause 5.3.3.1.9A of [11, TS 36.212].

Referring to FIG. 11 (b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in operation S8010, the first UE having self-selected a resource in the resource pool may transmit PSCCH (e.g., Side Link Control Information (SCI) or 1st-stage SCI) to the second UE using the resource. In operation S8020, the first UE may transmit PSSCH (e.g., 2nd-stage SCI, MAC PDU, data, etc.) related to the PSCCH to the second UE. In operation S8030, the first UE may receive PSFCH related to the PSCCH/PSSCH from the second UE.

Referring to FIG. 11 (a) or FIG. 11 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B. Table 8 shows one example of a 1st-stage SCI format.

[Table 8]

| 8.3.1.1 | SCI format 1-A |
|---|---|

SCI format 1-A is used for the scheduling of PSSCH and 2nd-stage-SCI on PSSCH

The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment - $\left\lceil \log_2 \left( \frac{N_{\text{subChannel}}^{\text{SL}} \left( N_{\text{subChannel}}^{\text{SL}} + 1 \right)}{2} \right) \right\rceil$ bits when the value of the higher layer parameter *sl-MaxNumPerReserve* is configured to 2; otherwise

$\left\lceil \log_2 \left( \frac{N_{\text{subChannel}}^{\text{SL}} \left( N_{\text{subChannel}}^{\text{SL}} + 1 \right) \left( 2 N_{\text{subChannel}}^{\text{SL}} + 1 \right)}{6} \right) \right\rceil$ bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period - $\left\lceil \log_2 N_{\text{rsv\_period}} \right\rceil$ bits as defined in clause 16.4 of [5, TS 38.213], where $N_{\text{rsv\_period}}$ is the number of entries in the higher layer parameter *sl-ResourceReservePeriodList,* if higher layer parameter *sl-MultiReserveResource* is configured; 0 bit otherwise.

- DMRS pattern - $\left\lceil \log_2 N_{\text{pattern}} \right\rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList.*

- 2nd-stage SCI format - 2 bits as defined in Table 8.3.1.1-1.

- Beta_offset indicator - 2 bits as provided by higher layer parameter *sl-BetaOffsets2ndSCI*and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

- Additional MCS table indicator - as defined in clause 8.1.3.1 of [6, TS 38.214]: 1 bit if one MCS table is configured by higher layer parameter *sl-Additional-MCS-Table,* 2 bits if two MCS tables are configured by higher layer parameter *sl-Additional-MCS-Table;* 0 bit otherwise.

- PSFCH overhead indication - 1 bit as defined clause 8.1.3.2 of [6, TS 38.214] if higher layer parameter *sl-PSFCH-Period* = 2 or 4; 0 bit otherwise.

(continued)

| - Reserved - a number of bits as determined by higher layer parameter *sl-NumReservedBits,* with value set to zero. |
| --- |

Table 9 shows exemplary 2nd-stage SCI formats.

[Table 9]

| |
| --- |
| 8.4  Sidelink control information on PSSCH<br>SCI carried on PSSCH is a 2nd-stage SCI, which transports sidelink scheduling information.<br>8.4.1  2nd-stage SCI formats<br>The fields defined in each of the $2^{nd}$-stage SCI formats below are mapped to the information bits $a_0$ to $a_{A-1}$ as follows:<br>Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$.<br>8.4.1.1  SCI format 2-A |
| SCI format 2-A is used for the decoding of PSSCH, with HARQ operation when HARQ-ACK information includes ACK or NACK, when HARQ-ACK information includes only NACK, or when there is no feedback of HARQ-ACK information.<br>The following information is transmitted by means of the SCI format 2-A:<br>- HARQ process number - 4 bits.<br>- New data indicator - 1 bit.<br>- Redundancy version - 2 bits as defined in Table 7.3.1.1.1-2.<br>- Source ID - 8 bits as defined in clause 8.1 of [6, TS 38.214].<br>- Destination ID - 16 bits as defined in clause 8.1 of [6, TS 38.214].<br>- HARQ feedback enabled/disabled indicator - 1 bit as defined in clause 16.3 of [5, TS 38.213].<br>- Cast type indicator - 2 bits as defined in Table 8.4.1.1-1 and in clause 8.1 of [6, TS 38.214].<br>- CSI request - 1 bit as defined in clause 8.2.1 of [6, TS 38.214] and in clause 8.1 of [6, TS 38.214]. |

Referring to FIG. 11(a) or FIG. 11(b), in step S8030, a first UE may receive a PSFCH based on Table 10. For example, the first UE and a second UE may determine a PSFCH resource based on Table 10, and the second UE may transmit HARQ feedback to the first UE on the PSFCH resource.

[Table 10]

| |
| --- |
| 16.3  UE procedure for reporting HARQ-ACK on sidelink<br>A UE can be indicated by an SCI format scheduling a PSSCH reception to transmit a PSFCH with HARQ-ACK information in response to the PSSCH reception. The UE provides HARQ-ACK information that includes ACK or NACK, or only NACK.<br>A UE can be provided, by *sl-PSFCH-Period,* a number of slots in a resource pool for a period of PSFCH transmission occasion resources. If the number is zero, PSFCH transmissions from the UE in the resource pool are disabled.<br>A UE expects that a slot $t'^{SL}_k \ (0 \le k < T'_{max})$ has a PSFCH transmission occasion resource if $k \bmod N^{\mathrm{PSFCH}}_{\mathrm{PSSCH}} = 0$, where $t'^{SL}_k$ is defined in [6, TS 38.214], and $T'_{max}$ is a number of slots that belong to the resource pool within 10240 msec according to [6, TS 38.214], and $N^{\mathrm{PSFCH}}_{\mathrm{PSSCH}}$ is provided by *sl-PSFCH-Period.*<br>A UE may be indicated by higher layers to not transmit a PSFCH in response to a PSSCH reception [11, TS 38.321]. |

(continued)

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH,* of the resource pool after a last slot of the PSSCH reception. A UE is provided by *sl-PSFCH-RB-Set* a set of $M_{\text{PRB, set}}^{\text{PSFCH}}$ PRBs in a resource pool for PSFCH transmission in a PRB of the resource pool. For a number of $N_{\text{subch}}$ subchannels for the resource pool, provided by *sl-NumSubchannel,* and a number of PSSCH slots associated with a PSFCH slot that is less than or equal to $N_{\text{PSSCH}}^{\text{PSFCH}}$, the UE allocates the

$$\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$$ PRBs from the $M_{\text{PRB, set}}^{\text{PSFCH}}$

PRBs to slot *i* among the PSSCH slots associated with the PSFCH slot and sub-channel j, where

$M_{\text{subch, slot}}^{\text{PSFCH}} = M_{\text{PRB, set}}^{\text{PSFCH}}/\left(N_{\text{subch}} \cdot N_{\text{PSSCH}}^{\text{PSFCH}}\right)$, $0 \le i < N_{\text{PSSCH}}^{\text{PSFCH}}$, $0 \le j < N_{\text{subch}}$, and the allocation starts in an ascending order of i and continues in an ascending order of *j*. The UE expects that $M_{\text{PRB, set}}^{\text{PSFCH}}$ is a multiple of

$N_{\text{subch}} \cdot N_{\text{PSSCH}}^{\text{PSFCH}}$.

The second OFDM symbol *l* of PSFCH transmission in a slot is defined as *l' = sl-StartSymbol + sl-LengthSymbols - 2* .

A UE determines a number of PSFCH resources available for multiplexing HARQ-ACK information in a PSFCH

transmission as $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$ where $N_{\text{CS}}^{\text{PSFCH}}$ is a number of cyclic shift pairs for the resource pool provided by *sl-NumMuxCS-Pair* and, based on an indication by *sl-PSFCH-CandidateResourceType,*

> - if *sl-PSFCH-CandidateResourceType* is configured as *startSubCH,* $N_{\text{type}}^{\text{PSFCH}} = 1$ and the $M_{\text{subch, slot}}^{\text{PSFCH}}$ PRBs are associated with the starting sub-channel of the corresponding PSSCH;
> - if *sl-PSFCH-CandidateResourceType* is configured as *allocSubCH,* $N_{\text{type}}^{\text{PSFCH}} = N_{\text{subch}}^{\text{PSSCH}}$ and the $N_{\text{subch}}^{\text{PSSCH}} \cdot M_{\text{subch, slot}}^{\text{PSFCH}}$ PRBs are associated with the $N_{\text{subch}}^{\text{PSSCH}}$ subchannels of the corresponding PSSCH.

The PSFCH resources are first indexed according to an ascending order of the PRB index, from the $N_{\text{type}}^{\text{PSFCH}} \cdot M_{\text{subch, slot}}^{\text{PSFCH}}$ PRBs, and then according to an ascending order of the cyclic shift pair index from the $N_{\text{CS}}^{\text{PSFCH}}$ cyclic shift pairs.

A UE determines an index of a PSFCH resource for a PSFCH transmission in response to a PSSCH reception as

$(P_{\text{ID}} + M_{\text{ID}}) mod R_{\text{PRB, CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.

A UE determines a $m_0$ value, for computing a value of cyclic shift $\alpha$ [4, TS 38.211], from a cyclic shift pair index corresponding to a PSFCH resource index and from $N_{\text{CS}}^{\text{PSFCH}}$ using Table 16.3-1.

Referring to FIG. 11(a), in step S8040, the first UE may transmit SL HARQ feedback to the BS over a PUCCH and/or PUSCH based on Table 11.

Table 11]

| 16.5 | UE procedure for reporting HARQ-ACK on uplink |
| --- | --- |
| A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0. | |
| For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources. | |
| For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0. | |
| From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable | |
| | - for one or more PSFCH reception occasions associated with SCI format 2-A with Cast type indicator field value of "10" |
| | - generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK |
| | - for one or more PSFCH reception occasions associated with SCI format 2-A with Cast type indicator field value of "01" |
| | - generate ACK if the UE determines ACK from at least one PSFCH reception occasion, from the number of PSFCH reception occasions corresponding to PSSCH transmissions, in PSFCH resources corresponding to every identity $M_{\text{ID}}$ of the UEs that the UE expects to receive the PSSCH, as described in clause 16.3; otherwise, generate NACK |
| | - for one or more PSFCH reception occasions associated with SCI format 2-B or SCI format 2-A with Cast type indicator field value of "11" |
| | - generate ACK when the UE determines absence of PSFCH reception for the last PSFCH reception occasion from the number of PSFCH reception occasions corresponding to PSSCH transmissions; otherwise, generate NACK |
| After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information. | |
| The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission. | |
| The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization. | |
| The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant. | |

Table 12 below shows details of selection and reselection of an SL relay UE defined in 3GPP TS 36.331. The contents of Table 12 are used as the prior art of the present disclosure, and related necessary details may be found in 3GPP TS 36.331.

[Table 12]

| 5.10.11.4    Selection and reselection of sidelink relay UE |
| --- |
| A UE capable of sidelink remote UE operation that is configured by upper layers to search for a sidelink relay UE shall:<br><br>1> if out of coverage on the frequency used for sidelink communication, as defined in TS 36.304 [4], clause 11.4; or<br>1> if the serving frequency is used for sidelink communication and the RSRP measurement of the cell on which the UE camps (RRC_IDLE)/ the PCell (RRC_CONNECTED) is below *threshHigh* within *remoteUE-Config* :<br>2>        search for candidate sidelink relay UEs, in accordance with TS 36.133 [16] |

  2>  when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filterCoefficient* as defined in 9.3(out of coverage), before using the SD-RSRP measurement results;

NOTE 1:  The details of the interaction with upper layers are up to UE implementation.

  2>  if the UE does not have a selected sidelink relay UE:

    3>  select a candidate sidelink relay UE which SD-RSRP exceeds *q-RxLevMin* included in either *reselectionInfoIC* (in coverage) or *reselectionInfoOoC* (out of coverage) by *minHyst*;

  2>  else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection):

    3>  select a candidate sidelink relay UE which SD-RSRP exceeds *q-RxLevMin* included in either *reselectionInfoIC* (in coverage) or *reselectionInfoOoC* (out of coverage) by *minHyst*;

  2>  else if the UE did not detect any candidate sidelink relay UE which SD-RSRP exceeds *q-RxLevMin* included in either *reselectionInfoIC* (in coverage) or *reselectionInfoOoC* (out of coverage) by *minHyst*:

    3>  consider no sidelink relay UE to be selected;

NOTE 2:  The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation.

## 5.10.11.5  Sidelink remote UE threshold conditions

A UE capable of sidelink remote UE operation shall:

  1>  if the threshold conditions specified in this clause were not met:

  2>  *if threshHigh* is not included in *remoteUE-Config* within *SystemInformationBlockType19*; or

  2>  if *threshHigh* is included in *remoteUE-Config* within *SystemInformationBlockType19*; and the RSRP measurement of the PCell, or the cell on which the UE camps, is below *threshHigh* by *hystMax* (also included within *remoteUE-Config*):

    3>  consider the threshold conditions to be met (entry);

> 1> else:
>
> 2>     if *threshHigh* is included in *remoteUE-Config* within *SystemInformationBlockType19*, and the RSRP measurement of the PCell, or the cell on which the UE camps, is above *threshHigh* (also included within *remoteUE-Config*):
>
> 3>     consider the threshold conditions not to be met (leave);

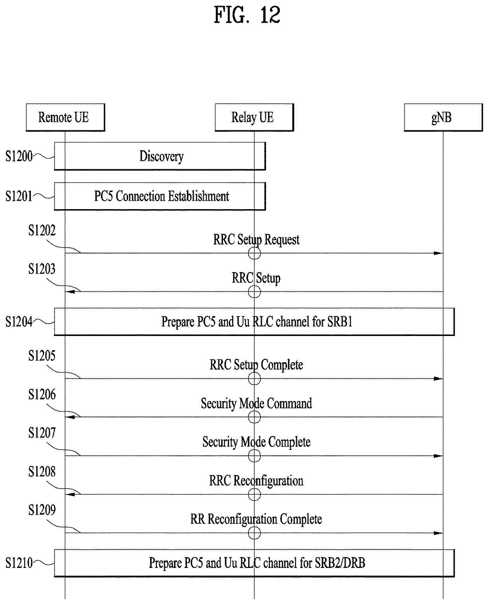

FIG. 12 illustrates a procedure of connection management and path switching to indirect from direct, captured in the TR document (3GPP TR 38.836) related to Rel-17 NR SL. A remote UE needs to configure a PDU session/DRB thereof with a network prior to transmission of user plane data.

PC5 unicast link configuration procedure in terms of PC5-RRC of Rel-16 NR V2X may be reused to configure a secure unicast link for L2 UE-to-Network relaying between a remote UE and a relay UE before the remote UE establishes Uu RRC connection with a network through a relay UE.

When a first RRC message for configuring connection with a gNB by a remote UE for both in-coverage and out-of-coverage begins, a PC5 L2 configuration for transmission between the remote UE and the UE-to-Network Relay UE may be based on the RLC/MAC configuration defined in the standard. Establishment of Uu SRB1/SRB2 and DRB of the remote UE may comply with a procedure of configuring a legacy Uu for L2 UE-to-Network Relay.

A higher-level connection configuration procedure shown in FIG. 12 may be applied to the L2 UE-to-Network Relay.

In operation S1200, the Remote and Relay UE may perform a search procedure and may configure PC5-RRC connection in operation S1201 based on the existing Rel-16 procedure.

In operation S1202, the remote UE may transmit a first RRC message (i.e., RRCSetupRequest) for connection configuration with a gNB through the relay UE using a basic L2 configuration of PC5. The gNB responds to the remote UE with an RRCSetup message (S1203). Transfer of RRCSetup to the remote UE may use a basic configuration. When the relay UE does not begin in RRC_CONNECTED, the relay UE needs to perform connection configuration thereof when receiving a message about the basic L2 configuration of PC5. In the current operation, a details for the RRCSetupRequest/RRCSetup message to the remote UE by the relay UE may be discussed in operation WI.

In operation S1204, the gNB and the relay UE may perform a relay channel configuration procedure through Uu. According to a configuration of the gNB, the relay/remote UE may configure an RLC channel for relaying SRB1 to the remote UE through PC5. The current operation prepares a relay channel for SRB1.

In operation S1205, the remote UE SRB1 message (e.g., RRCSetupComplete message) may be transmitted to the gNB through the relay UE using the SRB1 relay channel via PC5. The remote UE may be RRC-connected through Uu.

In operation S1206, the remote UE and the gNB configures security using a legacy procedure and transmits a security message through the relay UE.

In operation S1210, the gNB configures an additional RLC channel between the gNB and the relay UE for traffic relay. According to a configuration of the gNB, the relay/remote UE configures an additional RLC channel between the remote UE and the relay UE for traffic relay. The gNB transmits RRCReconfiguration to the remote UE through the relay UE to configure the relay SRB2/DRB. The remote UE transmits RRCReconfigurationComplete through the relay UE in response to the gNB.

In the case of L2 UE-to-Network relay in addition to connection configuration procedure:

- The RRC reconfiguration and RRC connection release procedure may reuse a legacy RRC procedure together with message content/configuration design left in operation WI.
- The RRC connection reconfiguration and RRC connection restart procedure may reuse the existing RRC procedure as a baseline by considering the connection configuration procedure of the L2 UE-to-Network Relay to process of a specific part of relay together with the message content/configuration design. The message content/configuration may be defined later.

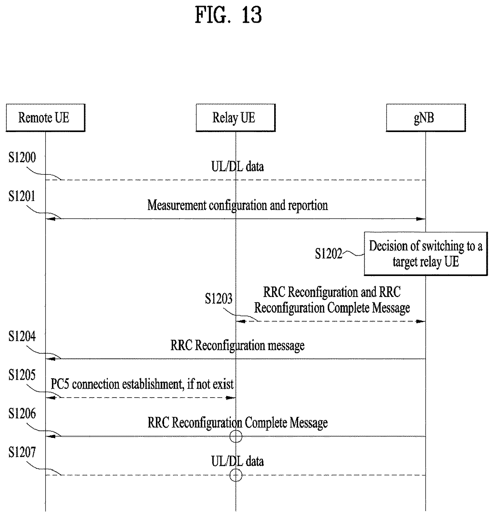

FIG. 13 illustrates an example of convention of direct to indirect path. To service continuity of the L2 UE-to-Network Relay, when the remote UE is converted to an indirect Relay UE, a procedure of FIG. 13 may be used.

Referring to FIG. 13, in operation S1301, the remote UE measures/discovers a candidate relay UE and then the remote UE reports one or more candidate relay UEs. When reporting, the remote UE may filter an appropriate relay UE that satisfies a higher layer reference. The report may include an ID of the relay UE and SL RSRP information, and here, details related to PC5 measurement may be determined later.

In operation S1302, the gNB determines to be converted to a target relay UE and selectively transmfits a target (re)configuration to the relay UE.

In operation S1304, an RRC reconfiguration message for the remote UE may include an ID of the target relay UE, a target Uu, and a PC5 configuration.

In operation S1305, when connection is not configured yet, the remote UE may configure PC5 connection with the target relay UE.

In operation S1306, the remote UE may feedback RRCReconfigurationComplete to the gNB through a target path using a target configuration provided from RRCReconfiguration.

In operation S1307, a data path is converted.

Table 13 below shows the timers related to RRC connections as disclosed in 3GPP TS 38.331. In addition, regarding the T304 timer for path switching of the remote UE, the disclosures in documents discussed in RAN2 115e-meeting, R2-2107276, R2-2107887, R2-2107367, and R2-2107967, may be used as prior art for the present disclosure.

[Table 13]

| ▪ Timer | Start | Stop | At expiry |
|---|---|---|---|
| ▪ T300 | Upon transmission of *RRCSetupRequest.* | Upon reception of *RRCSetup* or *RRCReject* message, cell reselection and upon abortion of connection establishment by upper layers. | Perform the actions as specified in 5.3.3.7. |
| ▪ T301 | Upon transmission of *RRCReestabilshmentRe quest* | Upon reception of *RRCReestablishment* or *RRCSetup* message as well as when the selected cell becomes unsuitable | Go to RRC_IDLE |
| ▪ T302 | Upon reception of *RRCReject* while performing RRC connection establishment or resume, upon reception of *RRCRelease* with *wait Time.* | Upon entering RRC_ CONNECTED or RRC IDLE, upon cell reselection and upon reception of *RRCReject* message. | Inform upper layers about barring alleviation as specified in 5.3.14.4 |
| ▪ T304 | Upon reception of *RRCReconfiguration* message including *reconfigurationWithSync* or upon conditional reconfiguration execution i.e. when applying a stored *RRCReconfiguration* message including *reconfiguration WithSync.* | Upon successful completion of random access on the corresponding SpCell, For T304 of SCG, upon SCG release | For T304 of MCG, in case of the handover from NR or intra-NR handover, initiate the RRC re-establishment procedure; In case of handover to NR, perform the actions defined in the specifications applicable for the source RAT. If any DAPS bearer is configured and if there is no RLF in source PCell, initiate the failure information procedure. For T304 of SCG, inform network about the reconfiguration with sync failure by initiating the SCG failure information procedure as specified in 5.7.3. |

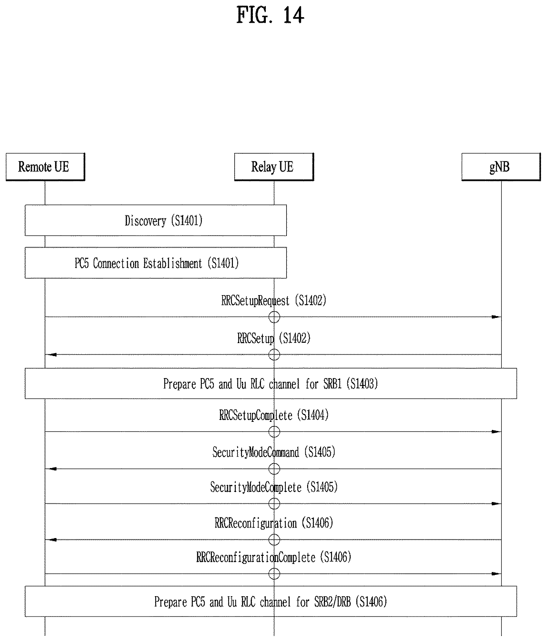

FIG. 14 illustrates a remote UE connection establishment procedure. A U2N remote UE needs to establish its own PDU session/DRB with a network before user plane data transmission. The legacy NR V2X PC5 unicast link establishment procedure may be reused to establish a secure unicast link between the U2N remote UE and the U2N relay UE before the remote UE establishes a Uu RRC connection with the network via the relay UE.

The Uu SRB1/SRB2 and DRB configurations of the U2N remote UE conform to the Uu configuration procedure for L2 UE-to-network relay. The following higher level connection establishment procedure in FIG. 14 applies to L2 U2N relay.

Referring to FIG. 14, in operation S1401, the U2N remote and U2N relay UEs perform the discovery procedure and establish a PC5-RRC connection using the NR V2X procedure.

In operation S1402, the U2N remote UE transmits a first RRC message (i.e., RRCSetupRequest) to establish a connection with the gNB via the relay UE using the PC5 RLC bearer configuration specified in PC5. If the U2N relay UE did not start in RRC_CONNECTED, it shall perform its own connection establishment as part of this operation. The gNB responds to the U2N remote UE with the RRCSetup message. The RRCSetup delivery to the U2N remote UE uses a specified PC5 RLC bearer configuration.

In operation S1403, the gNB and the U2N relay UE perform the relay channel configuration procedure via Uu. Based on the configuration of the gNB, the U2N relay/remote UE configures the RLC channel for relaying of SRB1 towards the U2N remote UE via PC5.

In operation S1404, the RRCSetupComplete message transmitted by the U2N remote UE is transmitted to the gNB via the U2N relay UE using the SRB1 relay channel configured in the U2N relay UE via PC5 and the SRB1 relay channel configured in the U2N relay UE via Uu. The U2N remote UE is then RRC connected via Uu.

In operation S1405, the U2N remote UE and the gNB configure security according to the Uu procedure, and a security message is delivered via the U2N relay UE.

In operation S1406, the gNB transmit an RRCReconfiguration message to the U2N remote UE via the U2N relay UE to configure the SRB2/DRB for the relay purpose. In response, the U2N remote UE transmits an RRCReconfigurationComplete message to the gNB via the U2N relay UE. In addition, the gNB configures an additional RLC channel between the gNB and the U2N relay UE for relay traffic. The U2N remote UE in RRC_CONNECTED interrupts the Uu RLM when the U2N remote UE is connected to the gNB through the U2N relay UE. Upon detection of the Uu RLF, the indication of the U2N relay UE may trigger reconfiguration of the connection to the U2N remote UE. Upon detection of the PC5 RLF, the U2N remote UE may trigger re-establishment of the connection.

The U2N remote UE may perform the following operations during the RRC re-establishment procedure.

If only a suitable cell is available, the U2N remote UE initiates the RRC re-establishment procedure towards the suitable cell.

If only a suitable U2N relay UE is available, the U2N remote UE initiates the RRC re-establishment procedure towards the serving cell of the suitable relay UE.

If both the suitable cell and the suitable relay are available, the remote UE may choose either one to initiate the RRC re-establishment procedure based on the implementation.

When the U2N remote UE initiates RRC resumption for a new gNB, a legacy UE context discovery procedure is performed. In other words, the new gNB retrieves the remote UE context related to the U2N remote UE.

The U2N remote UE performs the RNAU procedure while it is in RRC_INACTIVE. A U2N remote UE in coverage performs RNAU based on its own serving cell information if it is not PC5-connected with the U2N relay UE.

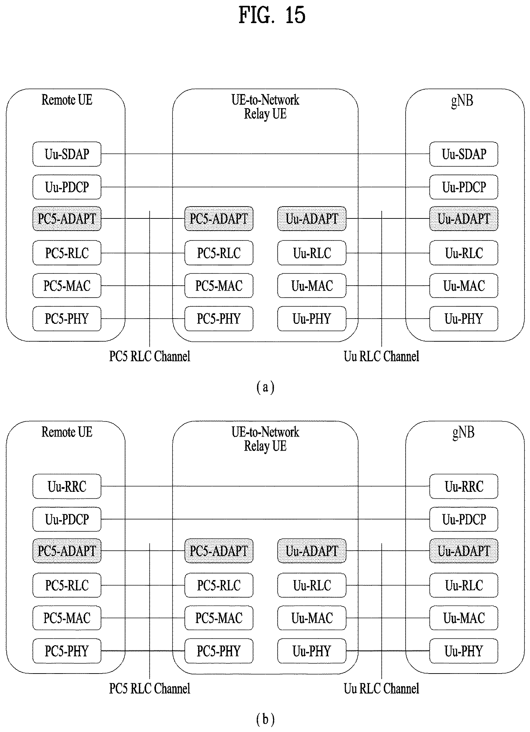

FIG. 15 illustrates a protocol stack for a user plane and control plane in an L2 U2N relay architecture. Specifically, FIG. 15-(a) is a user plane protocol stack for L2 UE-to-network relay, and FIG. 15-(b) is a control plane protocol stack for L2 UE-to-network relay.

For L2 U2N relay, an adaptation layer is placed on top of the RLC sublayer for both the CP and the UP on both PC5 and Uu interfaces. The Uu SDAP/PDCP and RRC are terminated between the U2N remote UE and the gNB, while the RLC, MAC, and PHY are terminated on each link (i.e., the link between the U2N remote UE and the U2N relay UE and the link between the U2N relay UE and the gNB).

L2 U2N relay for the uplink

- The Uu adaptation layer supports UL bearer mapping between reception PC5 RLC channel and a transmission Uu RLC channel for relay over the relay UE Uu interface. For uplink relay traffic, different end-to-end RBs (SRB, DRB) of the same remote UE and/or different remote UEs may be subject to N:1 mapping and data multiplexing over one Uu RLC channel.

- The Uu adaptation layer supports remote UE identification for UL traffic (multiplexing of data from multiple remote UEs). The identification information about the remote UE Uu radio bearer and the local remote UE ID are included in the Uu adaptation layer of the UL such that the gNB may correlate received packets for the specific PDCP entity associated with the correct remote UE Uu radio bearer of the remote UE.

L2 U2N relay for downlink

- The Uu adaptation layer supports DL bearer mapping in the gNB to map the end-to-end radio bearers (SRB, DRB) of the remote UE to the Uu RLC channel by the relay UE Uu interface. The Uu adaptation layer may be used to support DL N:1 bearer mapping and data multiplexing between multiple end-to-end radio bearers (SRB, DRB) of a remote UE and/or other remote UEs and one Uu RLC channel over a relay.

- The Uu adaptation layer supports remote UE identification for downlink traffic. The identification information about the remote UE Uu radio bearer and the local remote UE ID should be input to the Uu adaptation layer by the gNB on the DL in order for the relay UE to map the packets received from the remote UE Uu radio bearer to the related PC5 RLC channel.

For L2 U2N relay, the adaptation layer through PC5 is for bearer mapping only. There is no adaptation layer over PC5 hops for relaying messages from U2N remote UEs on BCCH and PCCH. For messages from U2N remote UEs for SRB0, no adaptation layer is present over PC5 hops, but the adaptation layer is present over Uu hops for both DL and UL.

Hereinafter, the present disclosure proposes various embodiments in which a remote UE performs connection establishment in a UE-to-NW relay, taking into account the adaptation layer.

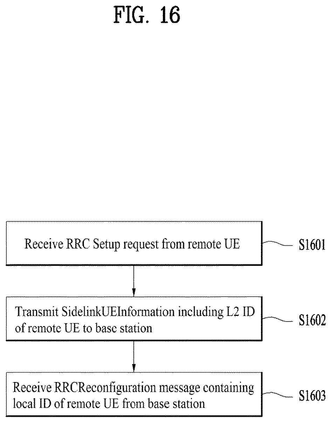

FIG. 16 illustrates the operation of a relay UE when a remote UE performs connection establishment according to one embodiment of the present disclosure. Referring to FIG. 16, the relay UE may receive an RRC Setup request from the remote UE (S1601). The relay UE may transmit SidelinkUEInformation including the L2 ID of the remote UE to a BS (S1601). Subsequently, the relay UE may receive from the base station an RRCReconfiguration message including a local ID of the remote UE (S1601).

Here, the SidelinkUEInformation may include an indicator indicating that the SidelinkUEInformation is a request related to the remote UE. In other words, the SidelinkUEInformation may indicate that the SidelinkUEInformation is intended to convey information about the remote UE that is distinguishable from existing SidelinkUEInformation. In chronological order, the local ID may be received after the L2 ID is transmitted. Further, the local ID may be received before a first UL message is transmitted to the BS. The local ID may be determined based on the L2 ID of the remote UE. The RRCReconfiguration message may include the L2 ID along with the local ID. In other words, the BS may determine the local ID based on the L2 ID received from the relay and transmit the same along with the L2 ID to the relay UE.

The RRC Setup request may be an initial message for the remote UE to establish a connection with the BS. Further, the RRC Setup request may be received through sidelink (SL) signaling radio bearer (SRB) 0. The RRCReconfiguration message may include a Uu bearer configuration for the transmission of messages (including SL SRB0) by the remote UE.

As the SidelinkUEInformation of the relay UE includes an indicator indicating that the SidelinkUEInformation is a request related to the remote UE as described above, the BS may configure/assign a local ID in response to the RRC Setup request and signal the same to the relay UE. This enables the establishment of a connection between the remote UE and the gNB with low latency.

Regarding the above description, a relay UE may include at least one processor, and at least one computer memory operably connectable to the at least one processor and storing instructions that, when executed, cause the at least one processor to perform operations. The operations may include receiving, by the relay UE, an RRC Setup request from a remote UE, transmitting, by the relay UE, SidelinkUEInformation including an L2 ID of the remote UE to the BS, and receiving, by the relay UE, an RRCReconfiguration message including a local ID of the remote UE from the BS, wherein the SidelinkUEInformation may include an indicator indicating that the SidelinkUEInformation is a request related to the remote UE.

Provided herein is a processor for performing operations for a remote UE in a wireless communication system. The operations may include receiving, by the relay UE, an RRC Setup request from a remote UE, transmitting, by the relay UE, SidelinkUEInformation including an L2 ID of the remote UE to a base station, and receiving, by the relay UE, an RRCReconfiguration message containing a local ID of the remote UE from the base station, wherein the SidelinkUEInformation may include an indicator indicating that the SidelinkUEInformation is a request related to the remote UE.

Further, provided herein is a non-volatile computer-readable storage medium storing at least one computer program containing instructions that, when executed by at least one processor, cause the at least one processor to perform operations for a relay UE. The operations may include receiving, by the relay UE, an RRC Setup request from a remote UE, transmitting, by the relay UE, SidelinkUEInformation including an L2 ID of the remote UE to a base station, and receiving, by the relay UE, an RRCReconfiguration message containing a local ID of the remote UE from the base station, wherein the SidelinkUEInformation may include an indicator indicating that the SidelinkUEInformation is a request related to the remote UE.

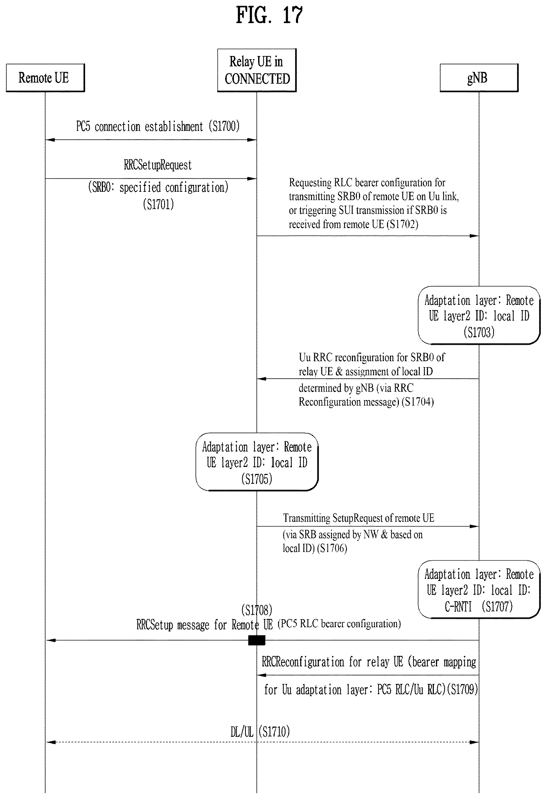

FIG. 17 illustrates a connection establishment procedure related to the above-described content. Referring to FIG. 17, in operation S1700, the remote UE and the relay UE establish a PC5-S/RRC connection. In this case, the remote UE may implicitly/explicitly notify the relay UE that the reason for establishing the PC5-S/RRC connection is to establish a connection to the gNB through the relay. In the case of explicit notification, it may be notified through a discovery message/MAC header/MAC CE, or the like that the SL connection is established for the purpose of relay. Alternatively, if a set of SRC/DST layer2 IDs that are available when a SL connection is implicitly established for the purpose of relaying are pre-assigned, establishing the SL connection using some/all of the SRC/DST layer2 IDs may be inferred to be an operation for relaying.

In operation S1701, the remote UE transmits an RRC Setup Request message taking the gNB as the final destination to the relay UE. This message corresponds to an initial message to establish a connection with the gNB and is transmitted through SL SRB0 such that the relay UE may recognize that the message is the first message transmitted by the remote UE. Here, SL SRB0 uses a value predetermined by a specified configuration.

In operation S1702, after receiving the message from the remote UE through SL SRB0, the relay UE makes a request to the gNB for an RLC bearer configuration for transmitting the RRC Setup Request message received from the remote UE. The message requesting the RLC bearer configuration for the remote UE may include a layer2 ID of the remote UE. Alternatively, if the message is received from the remote UE through SL SRB0, the SidelinkUEInformation (SUI) transmission is triggered, and a SUI message is transmitted along with the layer2 ID of the remote UE to the gNB. The SUI may include an indication that it is intended to convey information about the remote UE that may be distinguished from the existing SU.

Alternatively, the message received from the remote UE through SL SRB0 may be transmitted through a specified/fixedly configured Uu SRB (e.g., Uu SRB0). In this case, msg2, which passes through a specified/fixed Uu SRB to transmit msg1 received through SL SRB0 (e.g., RRC Setup Request message from the remote UE), may contain the layer2 (SRC) ID of the remote UE. The gNB generates a local ID for the layer2 (SRC) ID of the remote UE contained in the msg2.

In other words, messages transmitted through SL SRB0 cannot be transmitted using the local/temporal ID, and all signals from the remote UE that are to be subsequently transmitted to the gNB are transmitted to the gNB using the local/temporal ID. In addition, all signals from the gNB to the remote UE via the relay UE may be transmitted using the local/temporal ID on the Uu link.

In operation S1703, upon receiving, from the relay UE, the message requesting the configuration for transmitting SRB0 for the remote UE on the Uu link, or upon receiving an SUI message indicating that an SL connection has been established with the remote UE, the gNB generates/assigns a local ID for the layer2 ID of the remote UE.

In operation S1704, the gNB transmits an RRC Reconfiguration message to the relay UE for the Uu bearer configuration (SL-Uu bearer mapping) for the transmission of the remote UE's messages (including SL SRB0) to the relay UE. At this time, the local ID configured by the gNB is also transmitted. In other words, the layer2 ID of the remote UE and the local ID assigned by the gNB are transmitted together because it is necessary to indicate which local ID is for which remote UE.

In operation S1705, the adaptation layer of the relay UE that has been assigned the bearer mapping and local ID by the gNB may generate a mapping table of the remote UE and the local ID. After the mapping table is generated, all data received from the remote UE that is transmitted to the gNB via the relay UE is transmitted to the gNB in a message with only the local ID appended.

In operation S1706, the relay UE storing the RRC Setup Request message received from the remote UE transmits the RRC Setup Request message of the remote UE to the gNB based on the local ID through the Uu SRB assigned by the network in S1704. The layer2 ID of the remote UE is not used in the message.

In operation S1707, the gNB that has received the RRC Setup Request message of the remote UE via the relay UE may configure the C-RNTI for the remote UE. At this time, the adaptation layer of the gNB may create a mapping table for the layer2 ID and local ID of the remote UE and the C-RNTI of the remote UE.

In operation S1708, the gNB transmits an RRC Setup message to the remote UE via the relay UE. The message may contain the PC5 RLC bearer configuration.

In operation S1709, the gNB transmits an RRC Reconfiguration message to the relay UE. It transmits the configuration for the PC5 RLC bearer and the Uu RLC bearer mapping for the remote UE.

The procedure described above assumes that the relay UE is in the RRC CONNECTED state. However, even when the relay UE is in the RRC IDLE/INACTIVE state, the procedure may be almost the same by adding the operation of a new connection establishment between the relay UE and the gNB.

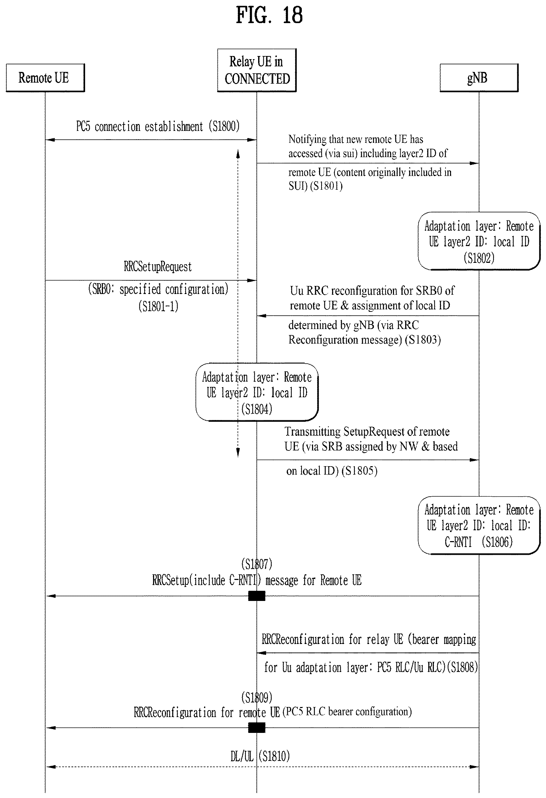

FIG. 18 illustrates a connection establishment procedure according to another embodiment of the present disclosure. The procedure of FIG. 18 assumes a different timing for the relay UE to notify the gNB that a new remote UE has accessed, unlike the operation of the remote UE and the gNB establishing a connection considering the adaptation layer in FIG. 17. The procedure illustrated in FIG. 17 is performed by notifying the gNB when the relay UE receives the RRC Setup Request message from the remote UE. On the other hand, in the example of FIG. 18, when the remote UE and the relay UE establish an SL (PC5-S/RRC) connection for the purpose of relay, the relay UE notifies the gNB that it has established an SL connection with the new remote UE.

Assuming that the remote UE establishes the SL connection with the relay UE to access the gNB, the relay UE may proceed with configuration for the transmission of messages that it will receive from the gNB and the remote UE even if it does not receive the RRC Setup Request message from the remote UE. In other words, the Uu RLC configuration for required local ID assignment and transmission of the SL SRB0 message may be set up through operations S1801 to S1805 of FIG. 18 without receiving the RRC Setup Request message from the remote UE. In other words, the latency required in transmitting the RRC Setup Request message of the remote UE may be reduced by providing the relay UE with the configuration for transmission of the RRC Setup Request message before receiving the RRC Setup Request message from the remote UE. The RRC Setup Request message transmitted from the remote UE to the relay UE may be transmitted independently of the signaling sequence for the setup between the relay UE and the gNB. In this case, operation S1805 may be performed only after the RRC Setup Request message from the remote UE is delivered.

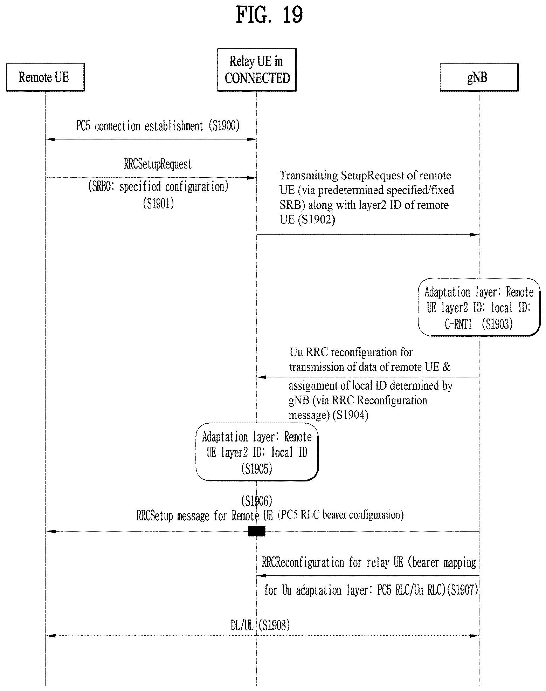

FIG. 19 illustrates another example of the establishment of a connection between the remote UE and the gNB. Referring to FIG. 19, in operation S1901, the remote UE transmits an RRC Setup Request message having the gNB as the final destination to the relay UE. This message corresponds to the initial message for establishing a connection with the gNB and is transmitted through SL SRBO such that the relay UE may recognize that the message is the first message transmitted by the remote UE. Here, SL SRBO uses a value predetermined by a specified configuration..

In operation S1902, the relay UE having received the message from the remote UE through SL SRBO may transmit the same through a specified/fixedly configured Uu SRB (e.g., Uu SRBO). In this case, msg2, which passes through a specified/fixed Uu SRB to transmit msg1 received through SL SRBO (e.g., RRC Setup Request message from the remote UE), may contain the layer2 (SRC) ID of the remote UE. The gNB generates a local ID for the layer2 (SRC) ID of the remote UE contained in the msg2.

In operation S1903, upon receiving the RRC Setup Request message of the remote UE through the specified/fixedly configured Uu SRB from the relay UE, the gNB may identify the C-RNTI of the remote UE, and thus may establish a mapping relationship between the layer2-ID, the local ID and the C-RNTI for the remote UE in the gNB.

In operation S1904, the gNB transmits an RRC Reconfiguration message to the relay UE for the Uu bearer configuration (SL-Uu bearer mapping) for the transmission of the remote UE's messages to the relay UE. At this time, the local ID configured by the gNB is also transmitted. In other words, the layer2 ID of the remote UE and the local ID assigned by the gNB are transmitted together because it is necessary to indicate which local ID is for which remote UE.

In operation S1905, the adaptation layer of the relay UE that has been assigned the bearer mapping and local ID by the gNB may generate a mapping table of the remote UE and the local ID. After the mapping table is generated, all data received from the remote UE that is transmitted to the gNB via the relay UE is transmitted to the gNB in a message with only the local ID appended.

In operation S1906, the gNB transmits the RRC Setup message to the remote UE via the relay UE.

In operation S1907, the gNB transmits an RRC Reconfiguration message to the relay UE. It transmits the configuration for the PC5 RLC bearer and the Uu RLC bearer mapping for the remote UE.

The procedure described above assumes that the relay UE is in the RRC CONNECTED state. However, even when the relay UE is in the RRC IDLE/INACTIVE state, the procedure may be almost the same by adding the operation of a new connection establishment between the relay UE and the gNB.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

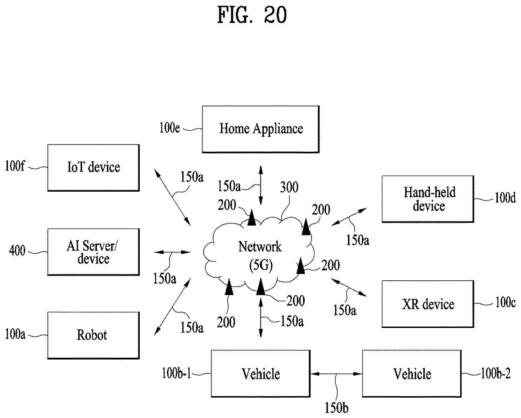

FIG. 20 illustrates a communication system 1 applied to the present disclosure.

Referring to FIG. 20, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

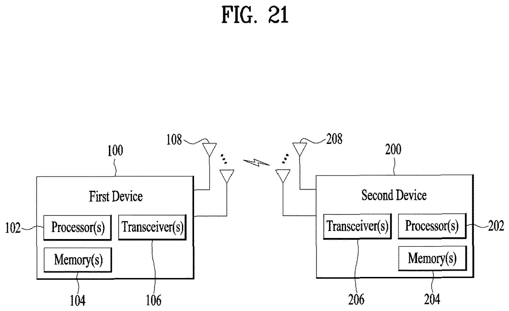

FIG. 21 illustrates wireless devices applicable to the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100×} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

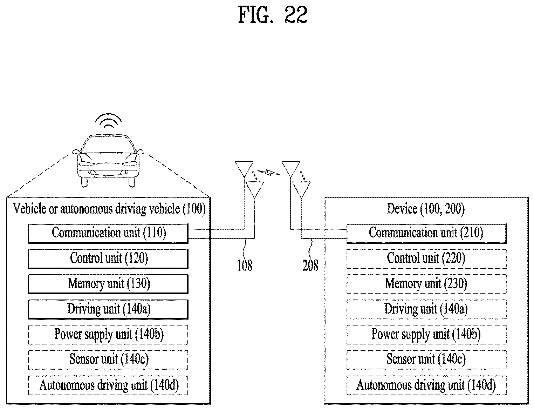

FIG. 22 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 22, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

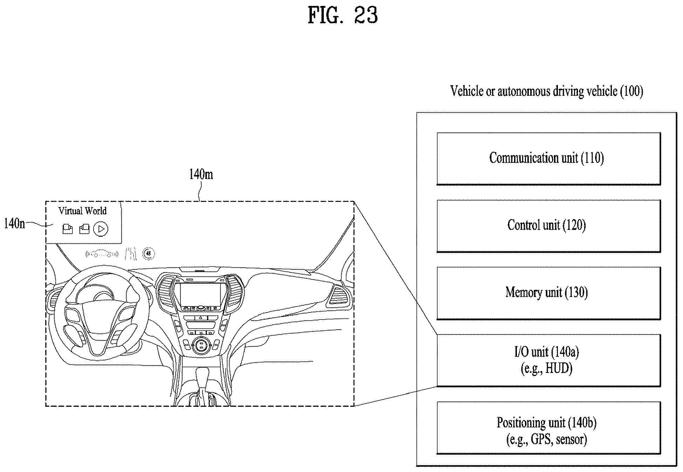

FIG. 23 illustrates a vehicle applied to the present disclosure. The vehicle may be implemented as a transport means, an aerial vehicle, a ship, etc.

Referring to FIG. 23, a vehicle 100 may include a communication unit 110, a control unit 120, a memory unit 130, an I/O unit 140a, and a positioning unit 140b.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

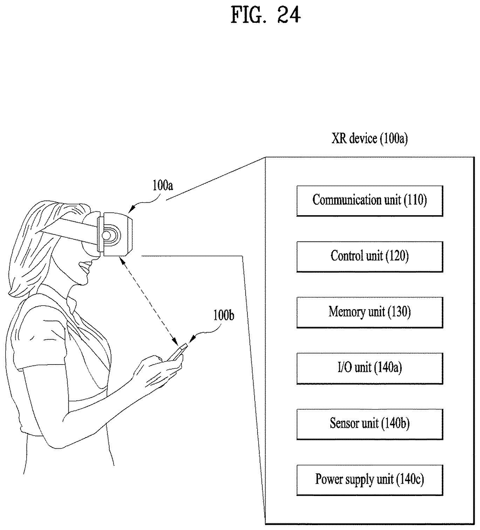

FIG. 24 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 24, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

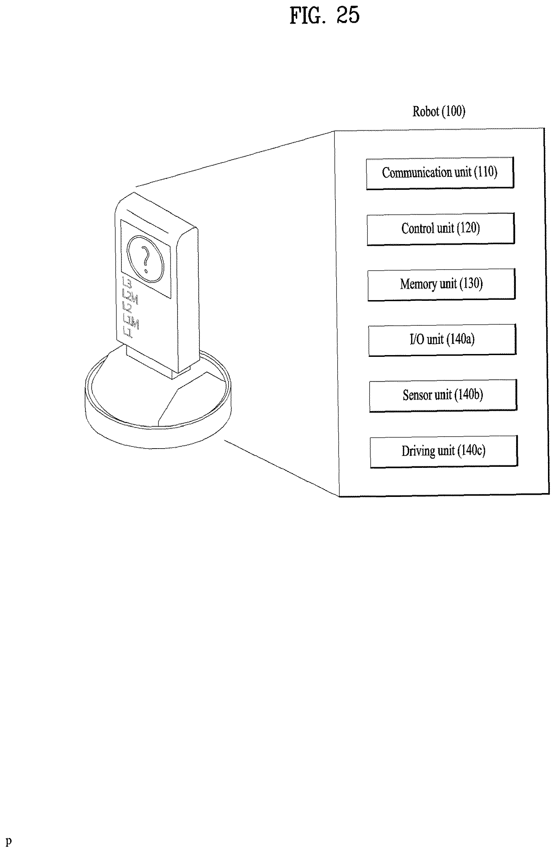

FIG. 25 illustrates a robot applied to the present disclosure. The robot may be categorized into an industrial robot, a medical robot, a household robot, a military robot, etc., according to a used purpose or field.

Referring to FIG. 25, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 21, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

FIG. 24 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 24, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 21, respectively.

The communication unit 110 may transmit and receive wired/radio signals (e.g., sensor information, user input, learning models, or control signals) to and from external devices such as other AI devices (e.g., 100x, 200, or 400 of FIG. 20) or an AI server (e.g., 400 of FIG. 20) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 20). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 20). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

[Industrial Applicability]

The above-described embodiments of the present disclosure are applicable to various mobile communication systems.

**Claims**

**1.** A method of operating a relay user equipment (UE) in a wireless communication system, the method comprising:

receiving, by the relay UE, an RRC Setup request from a remote UE;
transmitting, by the relay UE, SidelinkUEInformation including an L2 ID of the remote UE to a base station; and
receiving, by the relay UE, an RRCReconfiguration message containing a local ID of the remote UE from the base station,
wherein the SidelinkUEInformation comprises an indicator indicating that the SidelinkUEInformation is a request related to the remote UE.

2. The method of claim 1, wherein the local ID is received after transmitting the L2 ID.

3. The method of claim 1, wherein the local ID is received before transmitting a first uplink (UL) message to the base station.

4. The method of claim 1, wherein the local ID is determined based on an L2 ID of the remote UE.

5. The method of claim 1, wherein the RRC Setup request is an initial message for establishment of a connection with the base station by the remote UE.

6. The method of claim 1, wherein the RRC Setup request is received through sidelink (SL) signaling radio bearer (SRB) 0.

7. The method of claim 1, wherein the RRCReconfiguration message includes a Uu bearer configuration for transmission of a message of the remote UE.

8. The method of claim 1, wherein the RRCReconfiguration message includes the L2 ID along with the local ID.

9. The method of claim 1, wherein the base station is a gNB.

10. A relay user equipment (UE) in a wireless communication system, the relay UE comprising:

   at least one processor; and
   at least one computer memory operably connectable to the at least one processor and storing instructions that, when executed, cause the at least one processor to perform operations,
   wherein the operations comprise:

      receiving, by the relay UE, an RRC Setup request from a remote UE;
      transmitting, by the relay UE, SidelinkUEInformation including an L2 ID of the remote UE to a base station; and
      receiving, by the relay UE, an RRCReconfiguration message containing a local ID of the remote UE from the base station,
      wherein the SidelinkUEInformation comprises an indicator indicating that the SidelinkUEInformation is a request related to the remote UE.

11. The relay UE of claim 10, the relay UE communicating with at least one of another UE, a UE or base station related to an autonomous vehicle, or a network.

12. A processor for performing operations for a relay user equipment (UE) in a wireless communication system, wherein the operations comprise:

   receiving, by the relay UE, an RRC Setup request from a remote UE;
   transmitting, by the relay UE, SidelinkUEInformation including an L2 ID of the remote UE to a base station; and
   receiving, by the relay UE, an RRCReconfiguration message containing a local ID of the remote UE from the base station,
   wherein the SidelinkUEInformation comprises an indicator indicating that the SidelinkUEInformation is a request related to the remote UE.

13. A non-volatile computer-readable storage medium storing at least one computer program containing instructions that, when executed by at least one processor, cause the at least one processor to perform operations for a relay user equipment (UE), wherein the operations comprise:

   receiving, by the relay UE, an RRC Setup request from a remote UE;
   transmitting, by the relay UE, SidelinkUEInformation including an L2 ID of the remote UE to a base station; and

receiving, by the relay UE, an RRCReconfiguration message containing a local ID of the remote UE from the base station,
wherein the SidelinkUEInformation comprises an indicator indicating that the SidelinkUEInformation is a request related to the remote UE.

# FIG. 1

# FIG. 2

# FIG. 3

(a)

(b)

# FIG. 4

# FIG. 5

gNB
- Inter-Cell RRM
- RB Control
- Connection Mobility Control
- Radio Access Control
- Measurement Configuration and Provisioning
- Dynamic Resource Allocation (Scheduler)

NG-RAN

AMF
- NAS Security
- Idle-State Mobility Processing

SMF
- UE IP Address Allocation
- PDU Session Control

UPF
- Mobility Anchoring
- PDU Processing

5GC

Internet

# FIG. 6

# FIG. 7

# FIG. 8

PU5-U

(a)

PU5-C

(b)

# FIG. 9

PU5-U

(a)

PU5-U

(b)

# FIG. 10

FIG. 11

(a)                                                (b)

# FIG. 12

| Remote UE | Relay UE | gNB |
|---|---|---|

S1200 — Discovery

S1201 — PC5 Connection Establishment

S1202 — RRC Setup Request

S1203 — RRC Setup

S1204 — Prepare PC5 and Uu RLC channel for SRB1

S1205 — RRC Setup Complete

S1206 — Security Mode Command

S1207 — Security Mode Complete

S1208 — RRC Reconfiguration

S1209 — RR Reconfiguration Complete

S1210 — Prepare PC5 and Uu RLC channel for SRB2/DRB

# FIG. 13

| Remote UE | Relay UE | gNB |

S1200 — UL/DL data

S1201 — Measurement configuration and reportion

S1202 — Decision of switching to a target relay UE

S1203 — RRC Reconfiguration and RRC Reconfiguration Complete Message

S1204 — RRC Reconfiguration message

S1205 — PC5 connection establishment, if not exist

S1206 — RRC Reconfiguration Complete Message

S1207 — UL/DL data

# FIG. 14

| Remote UE | Relay UE | gNB |
|---|---|---|

Discovery (S1401)

PC5 Connection Establishment (S1401)

RRCSetupRequest (S1402)

RRCSetup (S1402)

Prepare PC5 and Uu RLC channel for SRB1 (S1403)

RRCSetupComplete (S1404)

SecurityModeCommand (S1405)

SecurityModeComplete (S1405)

RRCReconfiguration (S1406)

RRCReconfigurationComplete (S1406)

Prepare PC5 and Uu RLC channel for SRB2/DRB (S1406)

# FIG. 15

(a)

(b)

# FIG. 16

```
┌─────────────────────────────────────────────┐
│  Receive RRC Setup request from remote UE     │──── S1601
└─────────────────────────────────────────────┘
                       │
                       ▼
┌─────────────────────────────────────────────┐
│ Transmit SidelinkUEInformation including L2 ID│──── S1602
│ of remote UE to base station                  │
└─────────────────────────────────────────────┘
                       │
                       ▼
┌─────────────────────────────────────────────┐
│ Receive RRCReconfiguration message containing │──── S1603
│ local ID of remote UE from base station       │
└─────────────────────────────────────────────┘
```

# FIG. 17

```
   Remote UE          Relay UE in              gNB
                       CONNECTED
```

PC5 connection establishment (S1700)

RRCSetupRequest

(SRB0: specified configuration)
(S1701)

Requesting RLC bearer configuration for
transmitting SRB0 of remote UE on Uu link,
or triggering SUI transmission if SRB0 is
received from remote UE (S1702)

Adaptation layer: Remote
UE layer2 ID: local ID
(S1703)

Uu RRC reconfiguration for SRB0 of
relay UE & assignment of local ID

determined by gNB (via RRC
Reconfiguration message) (S1704)

Adaptation layer: Remote
UE layer2 ID: local ID
(S1705)

Transmitting SetupRequest of remote UE

(via SRB assigned by NW & based on
local ID) (S1706)

Adaptation layer: Remote
UE layer2 ID: local ID:
C-RNTI (S1707)

(S1708)
RRCSetup message for Remote UE (PC5 RLC bearer configuration)

RRCReconfiguration for relay UE (bearer mapping

for Uu adaptation layer: PC5 RLC/Uu RLC)(S1709)

DL/UL (S1710)

# FIG. 18

```
┌──────────┐        ┌──────────────┐                          ┌──────────┐
│Remote UE │        │ Relay UE in  │                          │   gNB    │
│          │        │  CONNECTED   │                          │          │
└──────────┘        └──────────────┘                          └──────────┘
```

PC5 connection establishment (S1800)

Notifying that new remote UE has
accessed (via sui) including layer2 ID of

remote UE (content originally included in
SUI) (S1801)

Adaptation layer: Remote
UE layer2 ID: local ID
(S1802)

RRCSetupRequest

(SRB0: specified configuration)
(S1801-1)

Uu RRC reconfiguration for SRB0 of
remote UE & assignment of local ID

determined by gNB (via RRC
Reconfiguration message) (S1803)

Adaptation layer: Remote
UE layer2 ID: local ID
(S1804)

Transmitting SetupRequest of remote
UE (via SRB assigned by NW & based

on local ID) (S1805)

Adaptation layer: Remote
UE layer2 ID: local ID:
C-RNTI (S1806)

(S1807)
RRCSetup(include C-RNTI) message for Remote UE

RRCReconfiguration for relay UE (bearer mapping

for Uu adaptation layer: PC5 RLC/Uu RLC)(S1808)

(S1809)
RRCReconfiguration for remote UE (PC5 RLC bearer configuration)

DL/UL (S1810)

# FIG. 19

Remote UE — Relay UE in CONNECTED — gNB

PC5 connection establishment (S1900)

RRCSetupRequest
(SRB0: specified configuration)
(S1901)

Transmitting SetupRequest of remote UE (via predetermined specified/fixed SRB) along with layer2 ID of remote UE (S1902)

Adaptation layer: Remote UE layer2 ID: local ID: C-RNTI (S1903)

Uu RRC reconfiguration for transmission of data of remote UE & assignment of local ID determined by gNB (via RRC Reconfiguration message) (S1904)

Adaptation layer: Remote UE layer2 ID: local ID (S1905)

(S1906)
RRCSetup message for Remote UE (PC5 RLC bearer configuration)

RRCReconfiguration for relay UE (bearer mapping for Uu adaptation layer: PC5 RLC/Uu RLC)(S1907)

DL/UL (S1908)

# FIG. 20

FIG. 21

# FIG. 22

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 23

Vehicle or autonomous driving vehicle (100)

Communication unit (110)

Control unit (120)

Memory unit (130)

I/O unit (140a)
(e.g., HUD)

Positioning unit (140b)
(e.g., GPS, sensor)

140m

140n

Virtual World

# FIG. 24

XR device (100a)

Communication unit (110)

Control unit (120)

Memory unit (130)

I/O unit (140a)

Sensor unit (140b)

Power supply unit (140c)

# FIG. 25

Robot (100)

Communication unit (110)

Control unit (120)

Memory unit (130)

I/O unit (140a)

Sensor unit (140b)

Driving unit (140c)

p

FIG. 26

## INTERNATIONAL SEARCH REPORT

| International application No. |
| --- |
| **PCT/KR2022/013739** |

**A.      CLASSIFICATION OF SUBJECT MATTER**

**H04W 76/11**(2018.01)i; **H04W 76/14**(2018.01)i; **H04W 80/02**(2009.01)i; **H04W 88/04**(2009.01)i; **H04W 92/18**(2009.01)i; **H04W 92/10**(2009.01)i

According to International Patent Classification (IPC) or to both national classification and IPC

**B.      FIELDS SEARCHED**

Minimum documentation searched (classification system followed by classification symbols)

H04W 76/11(2018.01); H04W 76/10(2018.01); H04W 88/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 경로 전환(path switching), 리모트 UE(Remote UE), 릴레이 UE(Relay UE), RRCReconfiguration, L2 ID(layer2 identifier), local ID

**C.      DOCUMENTS CONSIDERED TO BE RELEVANT**

| Category* | Citation of document, with indication, where appropriate, of the relevant passages | Relevant to claim No. |
| --- | --- | --- |
| Y | INTEL CORPORATION. Remaining issues of L2 Relay connection management. R2-2107306, 3GPP TSG-RAN WG2 Meeting #115-e, e-Meeting. 06 August 2021.<br>     See sections 1-2.1.1; and figure 1. | 1-13 |
| Y | VIVO. Remaining issues on service continuity in L2 relaying. R2-2107452, 3GPP TSG-RAN WG2 Meeting #115-e, e-Meeting. 06 August 2021.<br>     See sections 2 and 2.3; and figure 1. | 1-13 |
| A | QUALCOMM INCORPORATED. Further discussion on Service continuity of L2 U2N relay. R2-2107106, 3GPP TSG-RAN WG2 Meeting #115-e, e-Meeting. 06 August 2021.<br>     See section 2.1.1. | 1-13 |
| A | LG ELECTRONICS INC. Service continuity – measurement and report for path switching. R2-2108157, 3GPP TSG-RAN WG2 Meeting #115-e, e-Meeting. 06 August 2021.<br>     See section 2.1. | 1-13 |
| A | WO 2021-155526 A1 (MEDIATEK SINGAPORE PTE. LTD.) 12 August 2021 (2021-08-12)<br>     See paragraphs [0028]-[0059]; and figures 7-10. | 1-13 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 December 2022** | **14 December 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/013739**

| Patent document cited in search report | Publication date (day/month/year) | Patent family member(s) | Publication date (day/month/year) |
|---|---|---|---|
| WO 2021-155526 A1 | 12 August 2021 | WO 2021-155839 A1 | 12 August 2021 |

Form PCT/ISA/210 (patent family annex) (July 2022)